# EUROPÄISCHE PATENTSCHRIFT

(11) **EP 0 618 055 B1**
(45) Veröffentlichungstag und Bekanntmachung des Hinweises auf die Patenterteilung: **13.05.1998**
(21) Anmeldenummer: 94103988.5
(22) Anmeldetag: 15.03.1994
(51) Int. Cl.: B29B 7/74

(54) **Vorrichtung zum Verarbeiten von nicht reaktive Zusatzstoffe enthaltende Kautschukmischungen zu Kautschukfertigmischungen**
Device for transforming rubber mixtures containing no reactive additives to ready rubber mixtures
Dispositif pour transformer des mélanges de caoutchouc comprenant des additifs non-réactifs en mélanges de caoutchoux prêts

(30) Priorität: 30.03.1993 DE 4310356
(43) Veröffentlichungstag der Anmeldung: 05.10.1994
(73) Patentinhaber: Continental Aktiengesellschaft, 30165 Hannover (DE); Peter, Julius, Dr., 1130 Wien (AT)
(72) Erfinder: Peter, Julius, Dr., A-1130 Wien (AT)
(74) Vertreter: Depmeyer, Lothar

(56) Entgegenhaltungen:
- EP-A- 0 277 558
- EP-A- 0 444 477
- EP-A- 0 472 931
- EP-A- 0 532 855
- DE-A- 4 127 211

## Beschreibung

Die Erfindung betrifft ein Verfahren zum Verarbeiten von nicht reaktive Zusatzstoffe enthaltende Kautschukmischungen zu Kautschukfertigmischungen unter Verwendung eines Stempelkneters.

Bei bekannten Verfahren dieser Art wird die die nicht reaktiven Zusatzstoffe enthaltende Kautschukmischung - Grundmischung genannt - dem Stempelkneter zugeführt, in dem die Grundmischung gehörig plastiziert und mit den reaktiven Zusatzstoffen vermischt wird. Dabei muß somit zunächst die kalte Mischung erwärmt werden; diese Erwärmung muß jedoch nach Erreichen einer Grenztemperatur abgebrochen werden, um die mit reaktiven Zusatzstoffen versehene Mischung nicht zu gefährden. Zudem ergibt sich oft der Nachteil, daß dabei die reaktiven Zusatzstoffen nur ungenügend im Kautschuk verteilt sind.

Es ist zudem bekannt, Kautschukmischungen in Vorrichtungen zu verarbeiten, die einen Stempelkneter und einen darunter befindlichen stempellosen Kneter aufweisen (EP-A-0 472 931). Dabei dient der Stempelkneter zum Herstellen der Grundmischung und der stempellose Kneter zum Fertigmischen. Beide Kneter sind durch einen senkrechten Kanal zur Überführung des Mischgutes verbunden. Mit derartigen Vorrichtungen können jedoch die oben genannten Nachteile nicht vermieden werden.

Der Erfindung liegt die Aufgabe zugrunde, das eingangs erwähnte Verfahren dahingehend zu verbessern, daß eine bessere Verteilung der reaktiven Zusatzstoffe eintritt, dennoch aber die erwähnte Grenztemperatur nicht überschritten wird. Zudem werden kürzere Mischzeiten und insg. Qualitätsverbesserungen angestrebt.

Diese Aufgabe wird erfindungsgemäß dadurch gelöst, daß die dem Stempelkneter zuzuführende Kautschukmischung eine vorher hergestellte, fertige Grundmischung ist, die dem Stempelkneter zum Plastizieren zugeführt wird und nach dem Plastizieren als Charge unmittelbar einem stempellosen Kneter zugeführt wird, um die Fertigmischung durch Zugabe von reaktiven Zusatzstoffen bei verringerter Temperatur fertigzumischen.

Die Erfindung geht dabei von der Erkenntnis aus, daß ein großer Teil der Streuungen sowohl im Hinblick auf die Plastizität als auch im Hinblick auf die physikalischen Werte der Vulkanisate in ungenügender Verteilung der reaktiven Stoffe seine Ursache hat. Wendet man nunmehr das erfindungsgemäße Verfahren an, so muß zwar ein erhöhter technischer Aufwand in Kauf genommen werden, doch ergibt sich bei Anwendung der Erfindung unter Beibehaltung einer Zyklus-Zeit mehr als eine Verdoppelung der echten Mischzeit. Dadurch werden die Plastizität und die physikalischen Werte sehr günstig beeinflußt. Da außerdem insg. eine Produktionssteigerung eintritt, werden die höheren Anschaffungskosten wettgemacht.

Von besonderer Bedeutung ist die Erfindung ferner bei der Herstellung schnell vulkanisierender Kautschukmischungen. Sie fordern nämlich eine extrem niedrige Mischungstemperatur und zugleich eine vollständige, gleichmäßige Verteilung der reaktiven Stoffe in der Fertigmischung. Verwendet man den mit der Grundmischung beschickten Stempelkneter zur langsamen Plastizierung der Mischung so werden in der unten angeordneten stempellosen Knetereinheit unter weiterer Kühlung der ohnehin schon relativ kühlen Mischung die reaktiven Zusatzstoffe weiter verteilt. Auf diese Weise können auch großtechnisch schnelle Vulkanisationseinstellungen sicher beherrscht werden. Insb. dünnwandige Vulkanisate erfahren eine Produktionssteigerung von bis zu 35%. Weil außerdem die Fertigmischungen bei vergleichsweise geringen Temperaturen hergestellt werden, können sie sogar auf längere Zeit auf Vorrat gefertigt werden z.B. bei Erhöhung der Fellstärke bei gleichzeitiger Verringerung der Umdrehungszahlen, wenn diese Behandlung auf nachgeschalteten Walzwerken vollzogen werden soll.

Damit die im Stempelkneter plastizierte Grundmischung unmittelbar dem stempellosen Kneter bzw. dem Schlund des stempellosen Kneters zuführbar ist, wird vorzugsweise eine Vorrichtung verwendet, die die beiden Kneter so vereinigt, daß sich die Austrittsöffnung des Stempelkneters praktisch senkrecht oberhalb des stets offenen Schlundes des stempellosen Kneters befindet. Im freien Fall gelangt dann die plastizierte Grundmischung zur Fertigmischung in den stempellosen Kneter.

Für eine Vorrichtung zur Durchführung des erfindungsgemäßen Verfahrens ist es ferner wichtig, daß der stempellose Kneter im Vergleich zum Stempelkneter eine größere Mischkammer erhält und auch mit geringerer Rotordrehzahl arbeiten kann. Hierdurch erfährt die plastizierte Grundmischung bei ihrer Verarbeitung zur Fertigmischung eine entsprechend gute Kühlung, während die kleinere Mischkammer und ihr geschlossenes System beim Stempelkneter für eine Plastizierung der angelieferten Grundmischung von Vorteil sind.

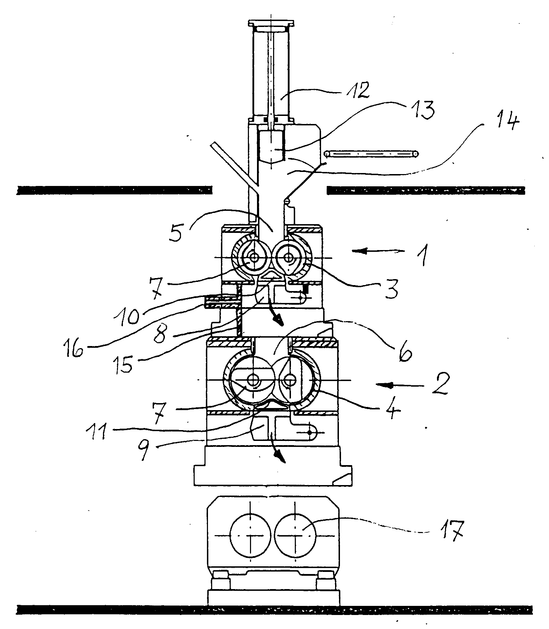

Weitere Einzelheiten der Erfindung werden anhand der Zeichnung erläutert, in der eine Vorrichtung zur Durchführung des erfindungsgemäßen Verfahrens dargestellt ist. Die Abbildung zeigt eine Vorrichtung zum Verarbeiten von Kautschukgrundmischungen (Kautschuk mit nicht reaktiven Zusatzstoffen vermischt) zu Fertigmischungen (mit reaktiven Zusatzstoffen vermischte Grundmischungen) im senkrechten Schnitt.

Das Oberteil der Vorrichtung besteht aus einem Stempelkneter 1 und das Unterteil der Vorrichtung aus einem stempellosen Kneter 2. Beide Kneter haben eine Mischkammer 3, 4, oben eine Eintrittsöffnung 5, 6, zwei Rotoren 7 sowie eine durch einen schwenkbaren Sattel 8, 9 verschließbare Austrittsöffnung 10, 11.

Dem Stempelkneter 1 ist ein mittels Arbeitszylinder 12 bewegbarer Stempel 13 zum Verschließen der Eintrittsöffnung 5 zugeordnet, ferner Einfülltrichter 14 zum Beschicken mit einer schon vorhandenen, bereitgestellten Grundmischung, die nicht on-line, sondern vom Vorrat her überstellt wird.

Der stempellose Kneter 2 hat einen stets offenen Schlund als Eintrittsöffnung 6. Der Raum oberhalb des Schlundes ist als praktisch seitlich geschlossener Kanal ausgeführt, von dem nur eine Seitenwand 15 dargestellt ist, der eine Absaugleitung 16 zugeordnet ist. In den freien Raum zwischen dem Stempelkneter 1 und dem stempellosen Kneter 2 klappt der Sattel 8 um eine senkrechte Achse verschwenkbar nach unten, wenn eine Entleerung der Mischkammer 3 stattfindet.

Unterhalb der erfindungsgemäßen Vorrichtung befindet sich noch ein Walzwerk 17, das der Verformung der aus dem stempellosen Kneter herausfallenden Fertigmischung dient.

Die bereits mit den nicht reaktiven Zusatzstoffen vermischte Grundmischung wird in Chargen dem Stempelkneter 1 zugeführt. Diese Mischung wird plastiziert und dann als Charge durch öffnen des Sattels 8 in den Schlund 6 im freien Fall entleert. Es beginnt nun der eigentliche Fertigmischprozess, jedoch im Vergleich zum Stempelkneter 1 mit verringerter Temperatur unter Hinzufügung von reaktiven Zusatzstoffen, wobei die Rotoren 7 des stempellosen Kneters 2 im Vergleich zum Stempelkneter 1 langsamer rotieren.

Zugleich wird dem Stempelkneter 1 wieder eine neue Charge Grundmischung zugeführt; beide Kneter 1, 2 sind daher in Betrieb. Mit dem Entleeren der Mischkammer 4 wird dann wieder die Mischkammer 3 in die Mischkammer 4 entleert, worauf der Stempelkneter 1 seinerseits neu beschickt wird. Die Fertigmischung wird demgemäß bei einer vergleichsweise geringen Temperatur fertiggestellt, um sie ggfs. nach einer Formgebung auf dem Walzwerk 17 auf Vorrat legen zu können.

## Patentansprüche

1. Verfahren zum Verarbeiten von nicht reaktive Zusatzstoffe enthaltenden Kautschukmischungen zu Kautschukfertigmischungen unter Verwendung eines Stempelkneters (1), dadurch gekennzeichnet, daß die dem Stempelkneter (1) zuzuführende Kautschukmischung eine vorher hergestellte, fertige Grundmischung ist, die dem Stempelkneter (1) zum Plastizieren zugeführt wird und nach dem Plastizieren als Charge unmittelbar einem stempellosen Kneter (2) zugeführt wird, um die Fertigmischung durch Zugabe von reaktiven Zusatzstoffen bei verringerter Temperatur im Vergleich zum Stempelkneter fertigzumischen.

2. Verfahren nach Anspruch 1, dadurch gekennzeichnet, daß das Vermischen der reaktiven Zusatzstoffe mit der Grundmischung bei einer derart niedrigen Temperatur stattfindet, daß die Fertigmischung auf Vorrat gefertigt werden kann.

## Claims

1. Method of processing rubber mixtures, which contain non-reactive additional substances, to form final rubber mixtures by employing a ram-type masticator (1), characterised in that the rubber mixture, which is to be supplied to the ram-type masticator (1), is a previously produced, final master batch, which is supplied to the ram-type masticator (1) for plasticizing purposes, and which, after the plasticizing process, is supplied as a charge directly to a ramless masticator (2) in order to effect the final mixing of the final mixture by adding reactive additional substances at a lower temperature compared with the ram-type masticator.

2. Method according to claim 1, characterised in that the mixing of the reactive additional substances with the master batch is effected at such a low temperature that the final mixture can be produced for stock.

## Revendications

1. Procédé de transformation de mélanges de caoutchoucs contenant des additifs non réactifs en mélanges de caoutchoucs finis, en utilisant un malaxeur à piston (1), caractérisé en ce que le mélange de caoutchouc à envoyer au malaxeur à piston (1) est un mélange de base terminé, préparé à l'avance, qui est envoyé au malaxeur à piston (1) pour la plastification, et est envoyé, aussitôt après la plastification, comme charge à un malaxeur sans piston (2), pour effectuer le mélange final par addition d'additifs réactifs à une température plus basse que dans le malaxeur à piston.

2. Procédé selon la revendication 1, caractérisé en ce que le mélange des additifs réactifs avec le mélange de base s'effectue à une température suffisamment basse pour que le mélange final puisse être fabriqué pour une réserve.
